# EUROPEAN PATENT SPECIFICATION

(11) **EP 1 406 045 B1**
(45) Date of publication and mention of the grant of the patent: **05.12.2012**
(21) Application number: 03090323.1
(22) Date of filing: 30.09.2003
(51) Int. Cl.: F23N 5/24, F23D 5/04

(54) **Heater burner capable of automatically controlling combustion amount**
Heizungsbrenner geeignet zur automatischen Steuerung der Verbrennungsmenge
Brûleur de chauffage capable de contrôler automatiquement la quantité de combustion

(30) Priority: 01.10.2002 JP 2002288806
(43) Date of publication of application: 07.04.2004
(73) Proprietor: TOYOTOMI CO., LTD., Nagoya-shi, Aichi-ken (JP)
(72) Inventor: Niwa, Osamu, Aichi (JP); Matsuyama, Ken, Aichi (JP)
(74) Representative: Hoffmann, Klaus-Dieter

(56) References cited:
- WO-A-97/30313
- US-A- 5 984 663
- US-B1- 6 250 133
- US-B1- 6 398 118
- US-B1- 6 431 457

## Description

The present invention relates to a method for automatically controlling a combustion amount in a heater.

From USA 5,984 663 a gas heater burner .is known which is provided with a combustion status sensor that provides heater performance data to a microprocessor that control the heater burner according to the sensor data. This known heater burner comprises
- a burner unit having a combustion chamber for burning a fuel with air from a room to be heated,
- a temperature setting means for setting a set temperature,
- a room temperature detection means for detecting a room temperature,
- an air contamination detection means for detecting an air contamination in the room and outputting a combustion stop command before the contamination exceeds a predetermined value,
- a control unit for automatically controlling a combustion amount in the burner unit according to the set temperature and the room temperature so that the room temperature comes close to the set temperature, and for stopping the combustion upon receipt of the combustion-stop command, wherein
- the air contamination detection means comprises a combustion-stop temperature decision means and a combustion-stop command generation means.

US 6,250,133 B1 discloses a method for detecting improper venting of a combustion appliance within an interior space relies upon a carbon dioxide detector to determine whether a preselected criterion indicative of improper venting is exceeded.

Further, a heater control system is known from US 6,431,457 B1 which is operable to modulate a heater of a building in order to maintain the temperature rise or air passing through the heater at or below a maximum allowable temperature rise value.

A technology has been known also that forcibly stops the operation of a heater burner when it is indirectly detected with a room temperature that a carbon dioxide (CO₂) concentration in the room temperature has exceeded a predetermined value. As to a heater burner such as used in a fan heater, in which a combustion amount is automatically changed according to a set temperature. Japanese Patent Laid-Open Publication No.-6-50587 has proposed that a combustion-stop temperature at which the operation of the burner is forcibly stopped be changed according to the set temperature.

With the conventional technology, however, erroneous operations may occur in which, depending on variations in ventilation of a room being heated, the burner fails to be stopped when it should be stopped, or gets stopped when it does not need to be stopped. Among heaters employing the conventional technology some have extreme difficulty setting conditions to pass a hermetically closed room test required by the French National Standard NF Standard regarding kerosene burners.

An object of the present invention is to provide a method for automatically controlling a combustion amount in a heater burner which is easy to design and can reliably stop its operation before room air is contaminated regardless of ventilating conditions of the room being heated.

Another object of the present invention is to provide a method for automatically controlling a combustion amount in a heater burner which can easily set conditions to reliably pass a variety of standards.

Still another object of the present invention is to provide a method for automatically controlling a combustion amount in a heater burner which can continue its operation unless a room temperature becomes excessively high when the heater is used in a well-ventilated room.

### SUMMARY OF THE INVENTION

The present invention aims at improvements on a method for automatically controlling a combustion amount in a heater burner, the heater burner comprising:
a burner unit having a combustion chamber for burning a fuel with air from a room being heated;
a temperature setting means for setting a set temperature Ts;
a room temperature detection means for detecting a room temperature T;
an air contamination detection means for detecting an air contamination in the room and outputting a combustion-stop command before the contamination exceeds a predetermined value; and
a control unit for automatically controlling a combustion amount in the burner unit according to the set temperature and the room temperature so that the room temperature T comes close to the set temperature Ts and for stopping the combustion upon receipt of the combustion-stop command,
wherein the air contamination detecting means has a combustion-stop temperature decision means and a combustion-stop command generation means;
the combustion-stop temperature decision means determining, based on the set temperature Ts and an initial room temperature To detected by the room temperature detection means or a predetermined initial room temperature To at the start of combustion, a first combustion-stop temperature Th1 used as a reference value when the set temperature Ts is below a reference temperature range, a second combustion-stop temperature Th2 used as a reference value when the set temperature Ts is within the reference temperature range, and a third combustion-stop temperature Th3 used as a reference value when the set temperature Ts is above the reference temperature range; and
the combustion-stop command generation means outputting the combustion-stop command when the room temperature reaches the reference value determined by the combustion-stop temperature decision means;
wherein the combustion-stop temperature decision means is so constructed as to define the first combustion-stop temperature Th1 as a value obtained by adding a predetermined first addition temperature AT1 to the initial room temperature To, the second combustion-stop temperature Th2 as a value obtained by adding a predetermined second addition temperature AT2, lower than the first addition temperature AT1, to the set temperature Ts, and the third combustion-stop temperature Th3 as a value obtained by adding a predetermined third addition temperature AT3, higher than the first addition temperature AT1, to the initial room temperature To,
and wherein combustion tests are conducted by varying the set temperature at different levels in a closed room with a predetermined airtightness to measure closed room temperatures at which a carbon dioxide concentration in the closed room exceeds the predetermined value, and the first addition temperature AT1, the second addition temperature AT2 and the third addition temperature AT3 are determined based on the temperature measurements so that the combustion- stop command is outputted from the combustion-stop command generation means before the carbon dioxide concentration in the closed room exceeds the predetermined value.

Combustion tests are conducted by varying the set temperature at different levels in a closed room (with such an airtightness that, two hours after the room is set at a carbone dioxide concentration of 4% ± 0,2%, a reduction in the carbon dioxide concentration will be 0,1 % or less, namely, the carbon dioxide concentration in the room will be in the range of 3,9% ± 0,2%) to measure temperatures at which the carbon dioxide concentration in the closed room exceeds a predetermined value, specifically 1% , and the first addition temperature AT1, the second addition temperature AT2 and the third addition temperature AT3 are determined based on the temperature measurements so that the combustion-stop command is outputted from the combustion-stop command generation means before the carbon dioxide concentration in the closed room exceeds the predetermined value, specifically 1%. The particular closed room conditions described above conform to the requirements of the NF Standard.

It is preferred that the heater burner further comprises an air fan to send heat from the burner unit out into the room.

The present invention has been accomplished by considering the fact that the room temperature at the start of combustion (initial room temperature) is closely related to a temperature of outdoor air entering into the room, that the room temperature when the air in the room is so contaminated that the combustion must be stopped is affected by a flow of combustion gas diffusing outdoors (or a flow of fresh air entering into the room), and the combustion gas flow is related with a difference between an outdoor air temperature (initial room temperature) and a room temperature. Tests conducted under the closed room conditions described above are showing that there is a relation between the set temperature and initial room temperature (or only the set temperature) and the room temperature when the air in the room is so contaminated as to demand combustion stop. To described in more detail, it has been found that, by appropriately setting the first and the third addition temperatures AT1, AT3 to be added to the initial room temperature and the second addition temperature AT2 to be added to the set temperature, the operation of the burner can rel iabl y be stopped before the air in the room gets contaminated regardless of ventilating conditions of the room being heated. Even when the initial temperature is assumed as constant, the similar effect can be obtained. That is, a combustion-stop temperature decision means is provided that determines, based on the set temperature Ts, the first combustion-stop temperature Th1 used as a reference value when the set temperatures Ts is below the predetermined reference temperature range, the second combustion-stop temperature Th2 used as a reference value when the set temperature Ts is within the reference temperature range, and the third combustion-stop temperature Th3 used as a reference value when the set temperature Ts is above the reference temperature range. In that case, the first combustion-stop temperature Th1, the second combustion-stop temperature Th2 and the third combustion-stop temperature Th3 are so determined as to cause the combustion-stop command generation means to output the combustion-stop command before the carbon dioxide concentration in the predetermined closed room exceeds a predetermined value.

The method according to the invention has an advantage of being able to easily set conditions that allow a heater burner to reliably meet the requirements of a variety of standards including the NF Standard.

Further, it is preferred that the reference temperature range, when the initial temperature is to he considered, ranges from a temperature as a value obtained by adding 5°C-7°C to the initial room temperature To to a temperature as a value obtained by adding 11°C-13°C to the initial room temperature To and that the first addition temperature AT1 is 7°C, the second addition temperature AT2 is 1,5°C or Lower and the third addition temperature AT3 is 13°C or lower. These particular values may be changed according to the conditions of use of the burner. When the initial temperature is not measured, the reference temperature range is determined by taking the initial temperature as a high constant temperature (e.g., 15°C) from the viewpoint of safety.

Preferably, the reference temperature range ranges from a temperature as a value obtained by adding about 6°C to the initial room temperature To to a temperature as a value obtained by adding about 12°C to the initial room temperature To, and the first addition temperature AT1 is about 7°C, the second addition temperature AT2 is about 1°C. and the third addition temperature AT3 is about 13°C. This setting can produce a satisfactory result.

When the heater burner is used in a welf-ventilated room, the air in the room is almost not contaminated regardless of the set temperature. In such a case, the combustion should be allowed to continue even if the room temperature rises. To deal with this situation, it is preferred that the used heater burner further comprises a timer to count a predetermined timer period from the start combustion, wherein, after the timer has finished counting the timer period, the combustion-stop command generation means is so constructed as to output the combustion-stop command based on a predetermined upper limit room temperature as the reference value which is used instead of the reference value determined by combustion-stop temperature decision means. The timer period may be set to an appropriate length of time according to test results. Unless the burner is used in an extremely airtight room, the timer period can be 30 minutes or more, To be on the safe side, the timer period should preferably be set to 40 minutes or more.

### BRIEF DESCRIPTION OF THE DRAWING

Fig. 1 is a block diagram showing an outline construction of one embodiment of the present invention as applied to a kerosene fan heater, a typical example of a heater burner capable of automatically controlling a combustion amount according to a set temperature.
Fig. 2 is a flow chart showing a software algorithm which is employed in a microcomputer to control major portions of the embodiment of Fig. 1.
Figs. 3A and 3B are respectively horizontal and vertical cross-sectional views of a closed room used to determine a first addition temperature AT1, a second addition temperature AT2 and a third addition temperature AT3.
Figs. 4A to 4C are tables of test results showing by how many degrees a temperature in a closed room has risen before a carbon dioxide concentration in the room exceeds 1%.
Figs. 5 illustrates an example of measured data in one test in the embodiment of Fig. 1.
Fig. 6 illustrates another example of measured data in one test in the embodiment of Fig. 1.
Fig. 7 illustrates still another example of measured data in one test in the embodiment of Fig. 1.
Fig. 8 illustrates yet another example of measured data in one test in the embodiment of Fig. 1.
Fig. 9 is a table of measurements taken with a set temperature fixed to a predetermined value, showing by how many degrees a room temperature has risen from an initial room temperature To before a carbon dioxide concentration in the closed room exceeds 1%.
Fig. 10 is a block diagram showing a construction of another embodiment of this invention.
Fig. 11 is a flow chart showing a software algorithm which is employed in a microcomputer to realize the configuration of Fig. 10.
Figs. 12A and 12B are tables of test results when the configuration of the second embodiment in Fig. 10 is implemented.

### DESCRIPTION OF THE PREFERRED EMBODIMENTS

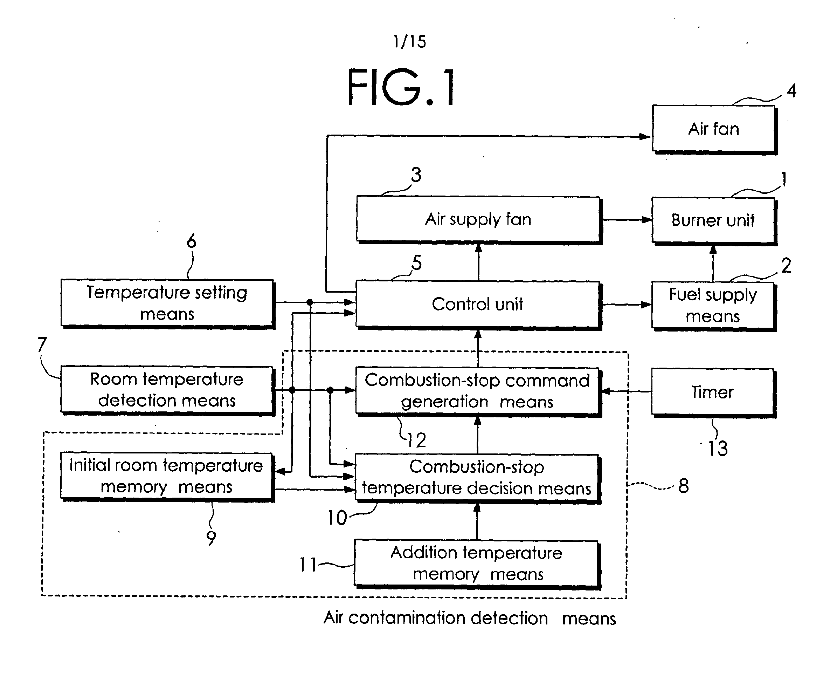

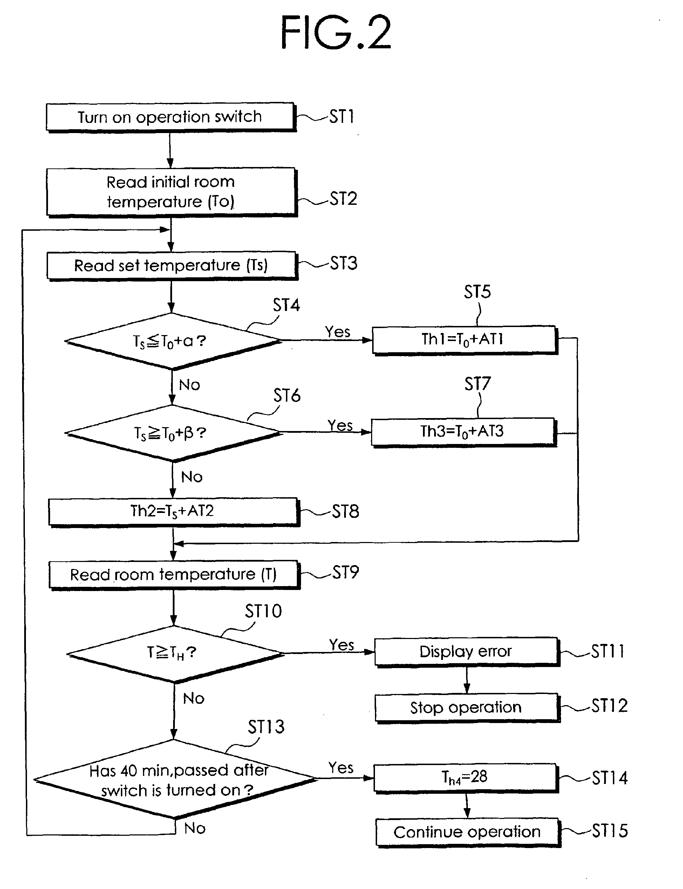

One example embodiment of this invention will be described in detail by referring to the accompanying drawings. Fig. 1 is a block diagram showing an outline construction of one embodiment of the invention as applied to a kerosene fan heater, a typical heater using a burner capable of automatically controlling a combustion amount according to a set temperature. The kerosene fan heater of this example is of a pot type with a heating capacity of 2,580 kcal/h. In Fig. 1, a block designated at reference numeral 1 is a burner unit of a pot type having a combustion chamber for burning a kerosene fuel with indoor air. Fig. 2 shows a software algorithm used in a microcomputer to control major portions of the embodiment of Fig. 1. In the following, the construction of Fig. 1 will be explained by referring to the algorithm of Fig. 2.

The burner unit 1 has a pot that is supplied with a kerosene fuel from a fuel supply means 2 including a fuel pump and also with room air from an air supply fan 3. Heat generated by the burner unit 1 is blown out by an air fan 4 into a room being heated. The fuel supply means 2, the air supply fan 3 and the air fan 4 are all controlled by control commands outputted from a control unit 5. The control unit 5 is constructed mainly of a microcomputer and, when a start switch not shown is turned on, a combustion operation is initiated according to a preinstalled program. According to a set temperature Ts entered from a temperature setting means 6 and a room temperature T output from a room temperature detection means 7 , the control unit 5 automatically controls a combustion amount in the burner unit 1. When it receives a combustion-stop command from an air contamination detection means 8, the control unit 5 outputs control commands respectively to the fuel supply means 2, the air supply fan 3 and the air fan 4 to stop the combustion in the burner unit 1. The temperature setting means 6 outputs the set temperature as a digital quantity to the control unit 5. The room temperature detection means 7 includes a temperature sensor such as thermistor and converts the detected temperature into a digital quantity for output to the control unit 5. The temperature sensor in the room temperature detection means 7 is arranged at a position where it can measure a room temperature without being influenced directly by heat from the burner unit 1.

The air contamination detection means 8 includes: an initial room temperature memory means 9 for storing an initial room temperature To or a room temperature at the start of combustion detected by the room temperature detection means 7 at step ST2 of Fig. 2, a combustion-stop temperature decision means 10, an addition temperature memory means 11, and a combustion-stop command generation means 12 to output a combustion-stop command when the room temperature T reaches a reference value TH determined by the combustion-stop temperature decision means 10.

The combustion-stop temperature decision means 10 executes steps ST3-ST8 of Fig. 2. That is, when the set temperature Ts set by the temperature setting means 6 is below a reference temperature range (To+α to To+β), a first combustion-stop temperature Th1 used as the reference value TH is defined, at steps ST4 and St5, to be a value (To+AT1) which is obtained by adding a predetermined first addition temperature AT1 stored in the addition temperature memory means 11 to an initial room temperature To. When the set temperature Ts is above the reference temperature range, the combustion-stop temperature decision means 10 defines a third combustion-stop temperature Th3 used as a reference value TH, at steps ST6 and ST7 in Fig. 2, to be a value (To+AT3) which is obtained by adding a predetermined third addition temperature AT3 higher than the first addition temperature AT1 to the initial room temperature To. Then, when the set temperature Ts is within the reference temperature range, the combustion-stop temperature decision means 10 defines a second combustion-stop temperature Th2 used as the reference value TH, at step ST8 in Fig. 2, to be a value (Ts+AT2) which is obtained by adding a second addition temperature AT2 lower than the first addition temperature AT1 to the set temperature Ts.

The reference temperature range (To+α to To+β) defined in this embodiment ranges from a temperature To+α, equal to 5°C-7°C (=α) added to the initial room temperature To, to a temperature To+β, equal to 11°C-13°C (=β) added to the initial room temperature To. This temperature range is determined by a hermetically closed room test described later. A temperature range used in this embodiment can be applied to most heater burners, including fan heaters, of which the combustion amount can be controlled.

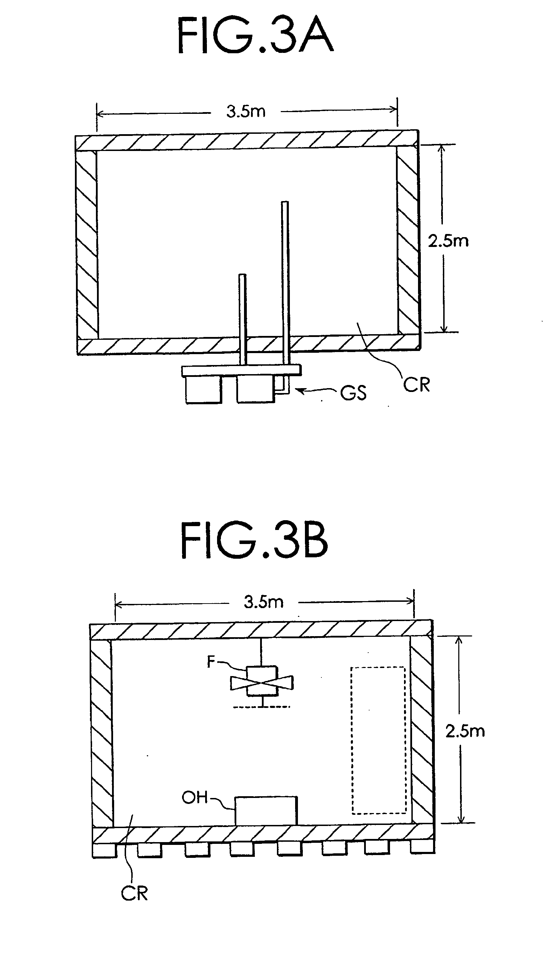

Next, how the first addition temperature AT1, the second addition temperature AT2 and the third addition temperature AT3 are determined will be explained. Figs. 3A and 3B are roughly illustrated horizontal and vertical cross sections showing a construction of a hermetically closed room used in determining the first addition temperature AT1, second addition temperature AT2 and third addition temperature AT3. The closed room CR has the same dimensions as those defined by the French National Standard or NF Standard, with a gas sensor GS for measuring a carbon dioxide concentration, a stirring fan F for stirring air in the room and a fan heater OH all installed at positions specified by the NF Standard. This closed room CR has such an airtightness that, two hours after the room is set at a carbon dioxide concentration of 4%±0.2%, a reduction in the carbon dioxide concentration will be 0.1% or less. Other conditions such as heat insulation also satisfy the requirements of the NF standard. In this embodiment, a fan heater OH was installed at the center of the closed room CR and combustion tests were conducted by varying the set temperature Ts at different levels. Room temperatures were measured when the carbon dioxide concentration in the closed room CR was 1% or higher. Based on the result of measurements, the first addition temperature AT1, second addition temperature AT2 and third addition temperature AT3 were determined such that a combustion-stop command is outputted from the combustion-stop command generation means 12 before the carbon dioxide concentration in the closed room becomes 1% or higher.

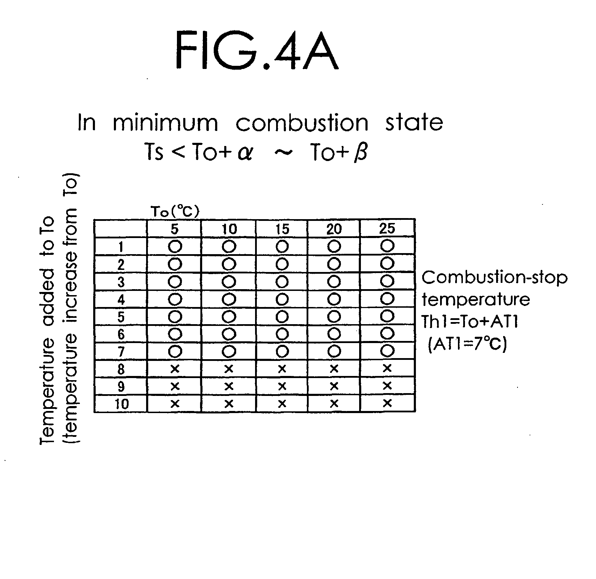

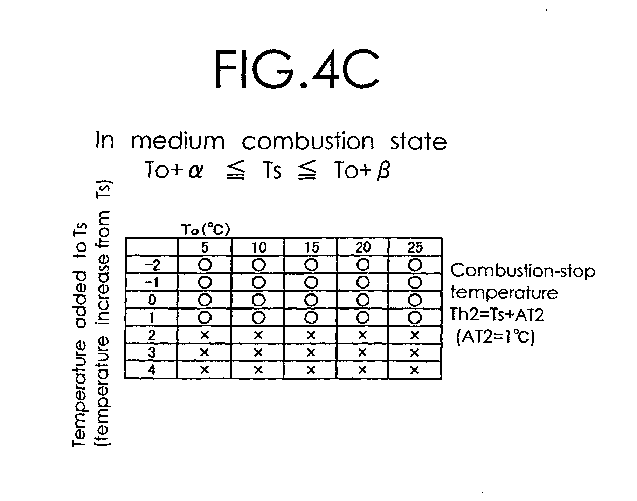

A table in Fig. 4A indicates a first result of measurements. In the case of measurements shown in Fig. 4A, the combustion test was made with α set to 6°C and β to 12°C and with the set temperature Ts set to a minimum (i.e., to obtain a minimum combustion). By changing an initial room temperature at the start of combustion (in a range of 5°C to 25°C), measurements were made of temperature rises in the closed room CR from the initial room temperature and of carbon dioxide concentrations. In the table of Fig. 4A, a mark ○ indicates that the carbon dioxide concentration is less than 1% and a mark X indicates that it is 1% or higher. This measurement result shows that if there is a temperature rise of 7°C, the carbon dioxide concentration in the room is 1% or higher irrespective of the initial room temperature. Thus, in this embodiment, the first addition temperature AT1 was set to 7°C.

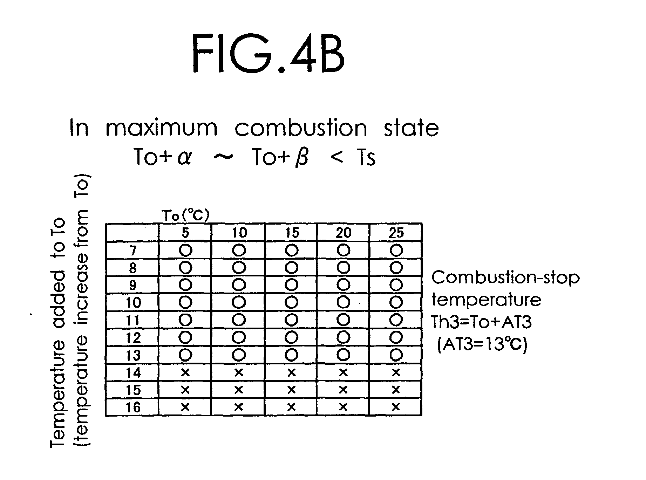

A table of Fig. 4B indicates a second measurement result. In the case of measurements shown in Fig. 4B, the combustion test was conducted with α set to 6°C and β to 12°C and with the set temperature Ts set to a maximum (i.e., to obtain a maximum combustion). By changing the initial room temperature at the start of combustion (in a range of 5°C to 25°C), measurements were made of temperature rises in the closed room CR from the initial room temperature and of carbon dioxide concentrations. Also in the table of Fig. 4B, a mark O indicates that the carbon dioxide concentration is less than 1% and a mark X indicates that it is 1% or higher. This measurement result shows that if there is a temperature rise of 13°C, the carbon dioxide concentration in the room is 1% or higher. Thus, in this embodiment, the third addition temperature AT3 was set to 13°C.

A similar combustion test conducted with the initial room temperature To set in the reference temperature range (To+α to To+β) has verified that, when the initial room temperature is within this reference temperature range and if the room temperature rises more than 1.5°C from the set temperature, the carbon dioxide concentration in the closed room CR becomes 1% or higher. Thus, in this embodiment, the second addition temperature AT2 was set to 1°C. It is found from the test that the second addition temperature AT2 may be set in a range of 1°C to 1.5°C.

The combustion-stop command generation means 12 executes steps ST9 and ST10 to check if the room temperature T has reached a reference value TH determined by the combustion-stop temperature decision means 10 and, if so, outputs a combustion-stop command. When the combustion-stop command is outputted, at step ST11 an error is indicated on a display unit not shown in the example of Fig. 2. At step ST12 the control unit 5, upon receipt of the combustion-stop command, outputs control commands for stopping the operation of the burner to the fuel supply means 2 and the air supply fan 3 to stop the combustion.

At step ST10, if the room temperature T is found not to have reached the reference value TH, the step proceeds to ST13 where the completion of counting of a timer 13 is checked. The timer 13 starts counting a predetermined length of time (in this case, 40 minutes) when a start switch is turned on at step ST1. If a combustion-stop command is not outputted before the timer 13 finishes its counting of the predetermined time length, the step moves to ST14 where the reference value TH is replaced with a predetermined upper limit room temperature Th4. This state is equivalent to the heater burner being used in a well-ventilated room. In this condition, since air in the room is almost not contaminated, the operation of the burner is continued irrespective of the set temperature unless the room temperature rises to the upper limit room temperature which corresponds to a room temperature in the event of abnormal combustion. The timer is set with an appropriate time length based on the test result. The timer period may be set to more than 30 minutes unless the room has an extremely high airtightness. For greater safety, the timer period is preferably set at 40 minutes or more.

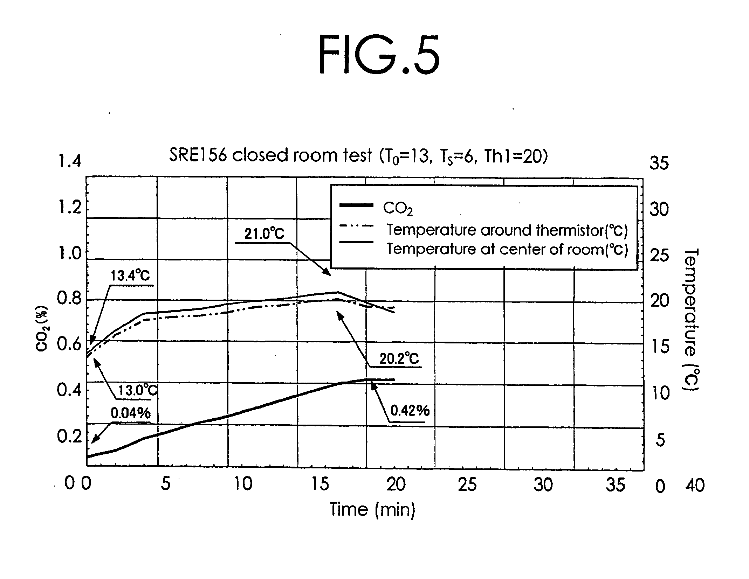

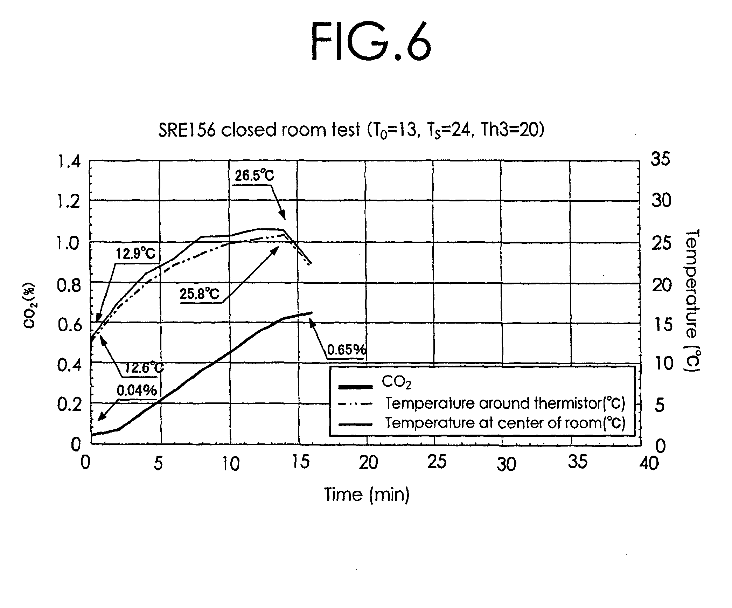

Fig. 5 shows measurements in the test of the above embodiment. This example represents a case where the initial room temperature To was 13°C and the set temperature Ts was 6°C. Since the first addition temperature AT1 at step ST5 was 7°C, the first combustion-stop temperature Th1 was 20°C. In this condition, the combustion-stop command was outputted when the room temperature was close to 20°C, after which the room temperature started to go down. The carbon dioxide concentration in the room leveled off at 0.42%. Fig. 6 illustrates another test result, with a set temperature Ts of 24°C which is higher than that of Fig. 5. Therefore, referring to the flow chart of Fig. 2, at step ST7 the third combustion-stop temperature Th3 is determined to be 13°C + 13°C = 26°C. In the actual test, the combustion-stop command was outputted at the room temperature of 26.5°C to stop the combustion in the burner unit 1. The carbon dioxide concentration in the room slightly increased after the combustion stop. This is because carbon dioxide was generated as a result of stopped combustion. In the examples of Fig. 5 and Fig. 6, the burner operation is stopped within 25 minutes from the start of operation and it is understood that there is no problem if the timer 13 is set with a timer period of 30 minutes.

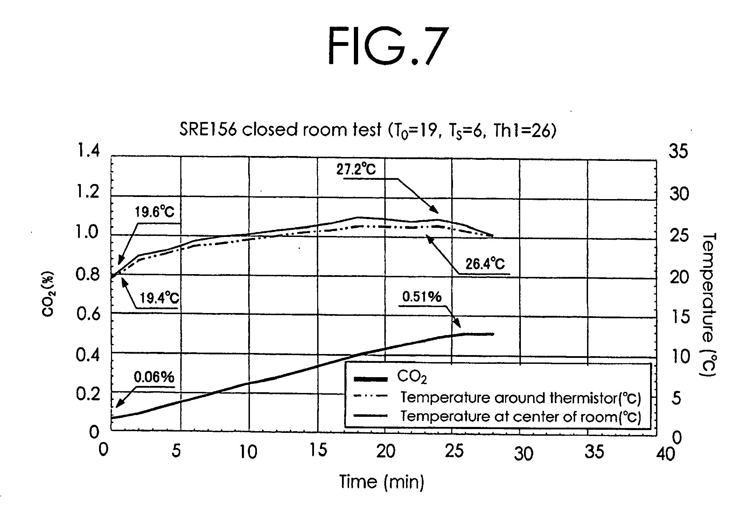

Fig. 7 shows another result of the test in the above embodiment. In this example, the initial room temperature To was 19°C and the set temperature Ts was 6°C. Since the first addition temperature AT1 at step ST5 is 7°C, the first combustion-stop temperature Th1 is 26°C. In this condition, the combustion-stop command was outputted when the room temperature was close to 27.2°C, after which the room temperature began to go down. The carbon dioxide concentration substantially did not increase from 0.51%.

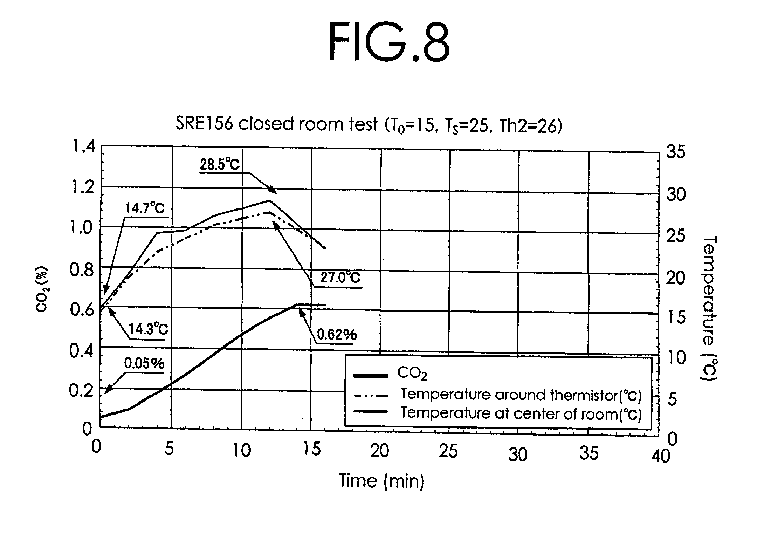

Fig. 8 shows a case where the set temperature Ts is in the reference temperature range. When the initial room temperature To is 15°C, the reference temperature range is between 21°C and 27°C. Hence, in this case, the second combustion-stop temperature Th2 as determined by step ST8 (25°C+1°C=26°C) is used as the reference value TH. In reality, the combustion-stop command was outputted at around 28.5°C to stop the combustion in the burner. This temperature error or difference is caused by a combination of an error of a sensor used in the test and a manufacturing error in the actual control circuit. Also, in this example, the combustion-stop command was output within 30 minutes from the start of combustion. This means that there is no problem if the timer period of the timer 13 is set to 30 minutes or more.

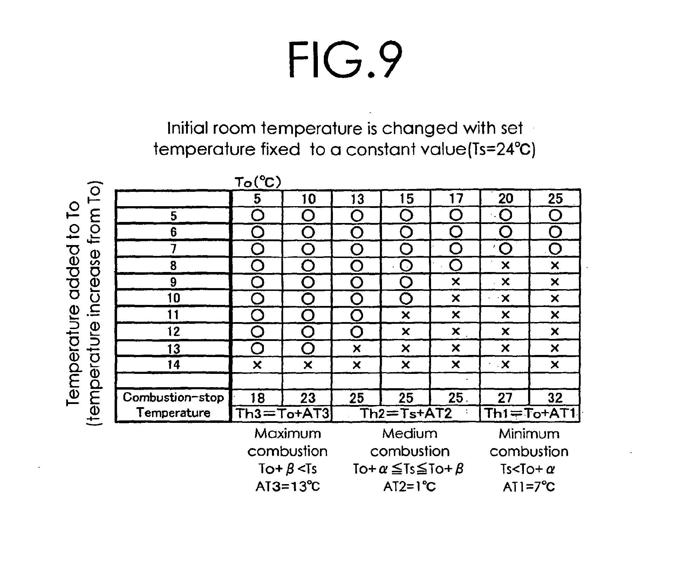

Fig. 9 shows measured data when the initial room temperature To is changed in steps of 5°C in a range of 5°C to 25°C, with the set temperature Ts set constant at 24°C. This measurement table indicates by how many degrees the room temperature has risen from the initial room temperature To to cause the carbon dioxide concentration in the closed room to exceed 1%. In this test, when the initial room temperature is low, the burner is operated with its maximum capacity or maximum combustion amount. When the initial room temperature is high, the burner is operated with its minimum combustion amount. When the initial room temperature is medium, the burner is operated with a medium combustion amount. It is understood from Fig. 9 that, when the set temperature Ts is above the reference temperature range, the room temperature is allowed to rise by 13°C from the initial room temperature To. When the set temperature Ts is below the reference temperature range, the room temperature is allowed to rise by 7°C from the initial room temperature To. Further, for the medium combustion amount combustion, the room temperature is allowed to rise by the set temperature Ts plus 1°C. Also, in this case, appropriateness of the first to third addition temperatures AT1-AT3 is supported.

While a fan heater is taken as an example in the above embodiment, the present invention can also be applied to other types of heater burner of which the combustion amount can be controlled.

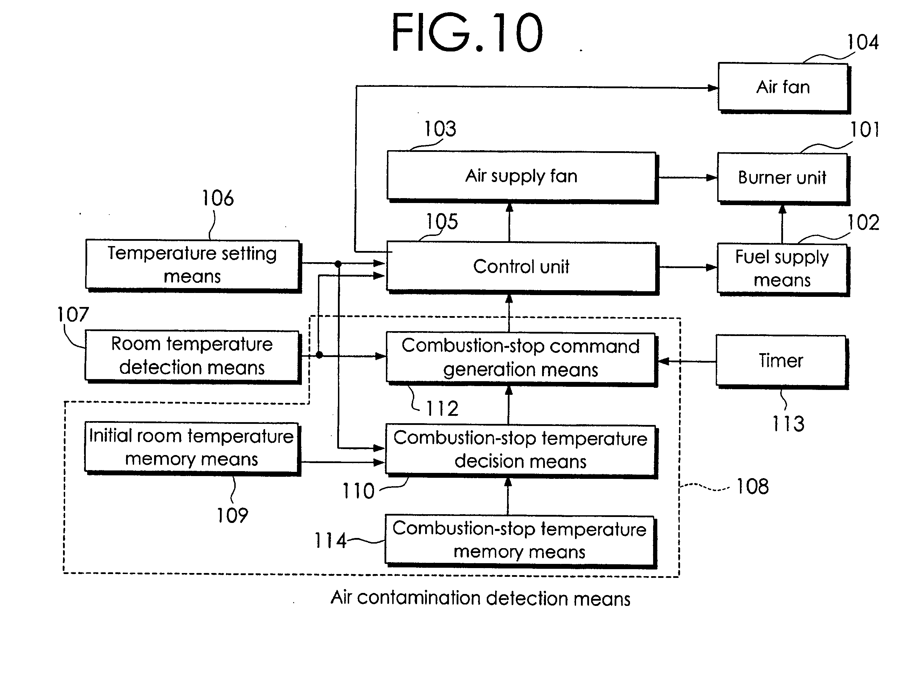

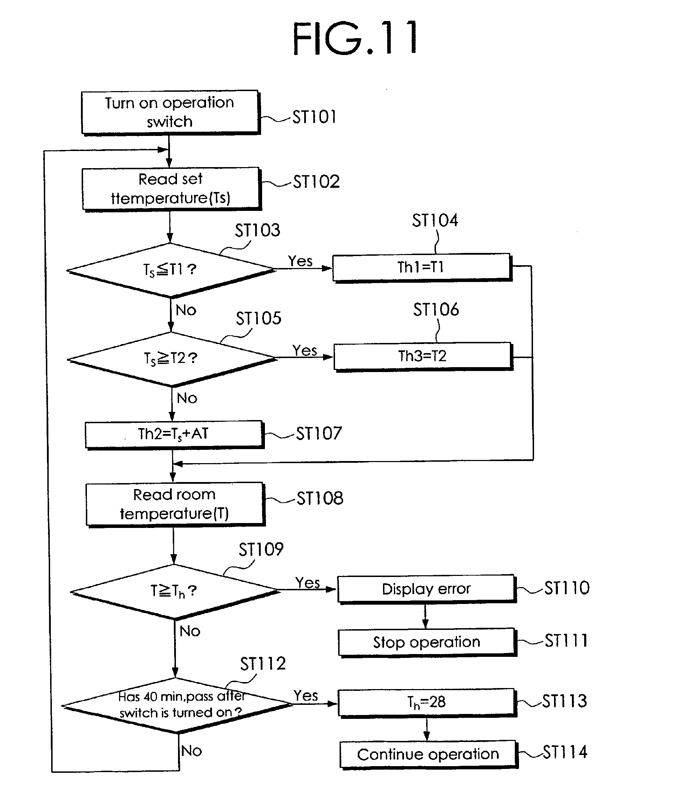

Fig. 10 is a block diagram showing a construction of another embodiment of this invention. This embodiment differs from the first embodiment in the construction of the air contamination detection means 108. A first difference of the second embodiment with the first embodiment is that the initial room temperature is not measured but is stored as a constant value in an initial room temperature memory means 109. A second difference is that the first and third combustion-stop temperatures Th1 and Th3 are determined in advance based on the result of measurement according to a relationship between the reference temperature range and the set temperature Ts, and then stored in a combustion-stop temperature memory means 114. In other aspects, the construction of this embodiment is similar to the block diagram of Fig. 1. Thus, those blocks in Fig. 10 identical with the corresponding blocks in Fig. 1 have their reference numerals formed by adding a number 100 to the reference numerals of the corresponding blocks in Fig. 1 and their explanations are omitted. Further, Fig. 11 is a flow chart showing a software algorithm executed by a microcomputer to realize the embodiment of Fig. 10. This resembles the flow chart of Fig. 2 for the previous embodiment except that the measured initial temperature is not read in.

In this embodiment, a combustion-stop temperature decision means 110 compares the set temperature Ts with the reference temperature range at steps ST103 and ST105. The method of determining the reference temperature range is the same as that of the previous embodiment. Suppose, for example, the initial room temperature is stored as a constant value of 15°C in the initial room temperature memory means 109. Then, the reference temperature range is determined to be 15°C+α (=t1) to 15°C+β (=t2). More specifically, supposing that α is 6°C and β is 12°C, the reference temperature range is 21°C to 27°C (t1 to t2). The combustion-stop temperature decision means 110 reads from the combustion-stop temperature memory means 114 according to the set temperature Ts the first combustion-stop temperature Th1 (=T1) used as a reference value when the set temperature Ts is below the reference temperature range, an addition temperature AT that determines the second combustion-stop temperature Th2 (=Ts+AT) used as a reference value when the set temperature Ts is within the reference temperature range, and the third combustion-stop temperature Th3 (=T2) used as a reference value when the set temperature Ts is above the reference temperature range at steps ST103-ST107. The second combustion-stop temperature Th2 is determined as a set temperature Ts + addition temperature AT at step ST108. Then, a combustion-stop command generation means 112 outputs a combustion-stop command when the room temperature reaches the reference value determined by the combustion-stop temperature decision means 110. The operation following step ST108 of Fig. 11 is the same as that shown in the flow chart of Fig. 2 and thus its explanation is omitted.

The first and third combustion-stop temperatures Th1, Th3 and the addition temperature AT which is used to determine the second combustion-stop temperature Th2 are, as in the previous embodiment, determined based on measurements obtained beforehand so that a combustion-stop command is outputted from the combustion-stop command generation means before the carbon dioxide concentration in a closed room exceeds a predetermined value. The first and third combustion-stop temperatures Th1, Th3 and the addition temperature AT thus determined are stored in the combustion-stop temperature memory means 114. More specifically, the closed room has such an airtightness that, two hours after the room is set at a carbon dioxide concentration of 4%±0.2%, a carbon dioxide concentration reduction will be 0.1% or less. The first and third combustion-stop temperatures Th1, Th3 and the addition temperature AT which is used to determine the second combustion-stop temperature Th2 are obtained as follows. Combustion tests are conducted in the closed room by varying at different levels the set temperature and a temperature in the closed room when the carbon dioxide concentration in the closed room exceeds 1% is measured. Based on the measurements, the addition temperature AT and the first and third combustion-stop temperatures Th1, Th3 are determined so that the combustion-stop command is outputted from the combustion-stop command generation means before the carbon dioxide concentration in the closed room exceeds 1%. The addition temperature AT is set to 1.5°C or less as in the case of the second addition temperature AT2 of the first embodiment and more preferably to 1°C.

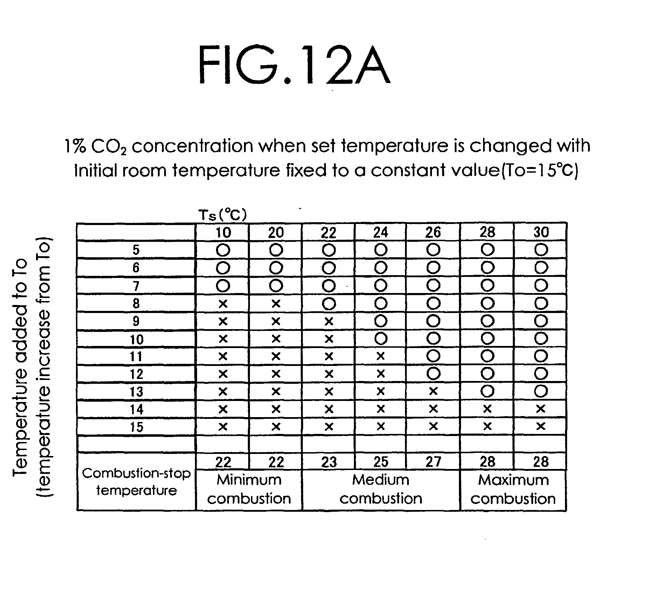

Fig. 12A indicates measured data with an initial room temperature To fixed to 15°C. This table shows a relationship between a set temperature Ts and an addition temperature (temperature rise) by which the room temperature has risen before the carbon dioxide concentration in the closed room exceeds 1%. The test condition is the same as the previous embodiment. The test result indicates that if the burner needs to be operated with a minimum combustion amount because the set temperature Ts is low, the carbon dioxide concentration becomes 1% or higher when the room temperature rises by 7°C from the fixed initial room temperature, namely, when the room temperature is higher than 22°C. It is understood from this example that the first combustion-stop temperature Th1 (T1) for the minimum combustion needs to be set to 22°C.

When the burner needs to be operated with a maximum combustion amount because the set temperature Ts is high, it is seen that, when the room temperature rises by 13° from the fixed initial room temperature To (i.e., when the room temperature is higher than 28°C), the carbon dioxide concentration becomes 1% or higher. This example indicates that the combustion-stop temperature Th3 (T2) for the maximum combustion needs to be set to 28°C.

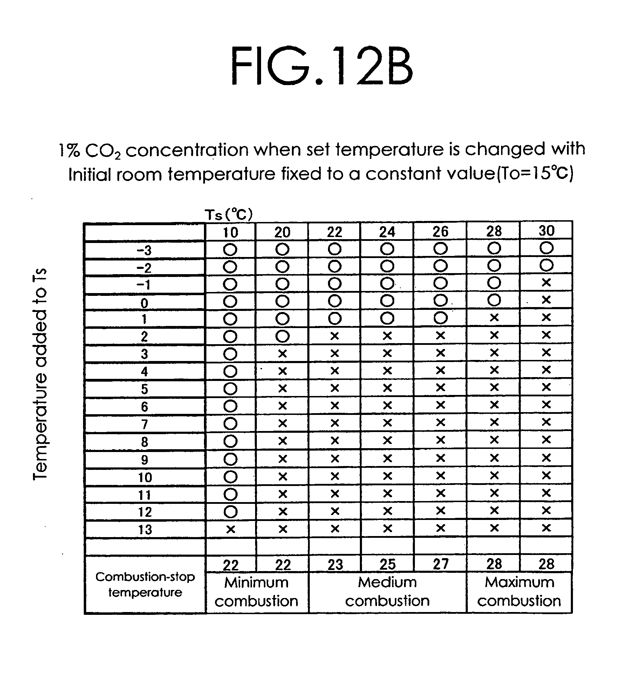

When the set temperature Ts is a medium temperature and the burner needs to be operated with a medium combustion amount, the test result shows that the room temperature at which the carbon dioxide concentration exceeds 1% increases in proportion to an increase in the set temperature Ts. More specifically, when the room temperature becomes higher than the set temperature Ts plus 1°C (1°C=addition temperature AT), the carbon dioxide concentration exceeds 1%. In this range of set temperature, it is therefore understood that the second combustion-stop temperature (Th2) needs to be set to the set temperature Ts plus 1°C (1°C=addition temperature AT). Fig. 12B indicates another test result with the initial room temperature To fixed to 15°C and shows by how many degrees the room temperature has risen from the set temperature Ts before the carbon dioxide concentration exceeds 1%. This measurement table shows quite the same result as Fig. 12A. From these test results, this embodiment set the first combustion-stop temperature Th1 to 22°C, the second combustion-stop temperature Th2 to set temperature Ts + 1°C, and the third combustion-stop temperature Th3 to 28°C.

It is therefore understood that, even when the initial room temperature is fixed, it is possible to determine the first and third combustion-stop temperatures by adding the predetermined addition temperatures to the initial room temperature To and also to determine the second combustion-stop temperature by adding the addition temperature AT to the set temperature Ts. The first and third addition temperatures may have to be changed according to the fixed initial temperature. When viewed from a different angle, this invention can determine the first and third combustion-stop temperatures Th1 and Th3 beforehand according to the set temperature Ts and then calculate the second combustion-stop temperature Th2.

According to this invention, a method for automatically controlling a combustion amount in a heater burner can be provided. A heater burner can be reliably stopped before air in a room being heated gets contaminated regardless of how well the room is ventilated.

This invention also has an advantage of being able to easily establish conditions that allow a heater burner to reliably meet requirements of a variety of standards.

This invention also allows a heater burner which, when used in a well-ventilated room, to continue its operation unless the room temperature rises excessively.

## Claims

1. A method for automatically controlling a combustion amount in a heater burner, the heater burner comprising:
A burner unit (1) having a combustion chamber for burning a fuel with air from a room being heated;
a temperature setting means (6) for setting a set temperature (Ts);
a room temperature detection means (7) for detecting a room temperature (T);
an air contamination detection means (8) for detecting an air contamination in the room and outputting a combustion-stop command before the contamination exceeds a predetermined value; and
a control unit (5) for automatically controlling a combustion amount in the burner unit (1) according to the set temperature (Ts) and the room temperature (T) so that the room temperature (T) comes close to the set temperature (Ts), and for stopping the combustion upon receipt of the combustion-stop command,
wherein the air contamination detecting means (8) has a combustion-stop temperature decision means (10) and a combustion-stop command generation means (12);
the combustion-stop temperature decision means (8) determining, based on the set temperature (Ts) and an initial room temperature (To) detected by the room temperature detection means (7) or a predetermined initial room temperature (To) at the start of combustion, a first combustion-stop temperature (Th1) used as a reference value when the set temperature (Ts) is below a reference temperature range, a second combustion-stop temperature (Th2) used as a reference value when the set temperature (Ts) is within the reference temperature range, and a third combustion-stop temperature (Th3) used as a reference value when the set temperature (Ts) is above the reference temperature range; and
the combustion-stop command generation means (12) outputting the combustion-stop command when the room temperature reaches the reference value determined by the combustion-stop temperature decision means (10);
wherein the combustion-stop temperature decision means (10) is so constructed as to define the first combustion-stop temperature (Th1) as a value obtained by adding a predetermined first addition temperature (AT1) to the initial room temperature (To),
the second combustion-stop temperature (Th2) as a value obtained by adding a predetermined second addition temperature (AT2), lower than the first addition temperature (AT1), to the set temperature (Ts), and the third combustion-stop temperature (Th3) as a value obtained by adding a predetermined third addition temperature (AT3), higher than the first addition temperature (AT1), to initial room temperature (To),
wherein combustion tests are conducted by varying the set temperature at different levels in a
closed room (CR) with a predetermined airtigtness to measure closed room temperatures at which a carbon dioxide concentration in the closed room exceeds the predetermined value, and the first addition temperature (AT1), the second addition temperature (AT2) and the third addition temperature (AT3) are determined based on the temperature measurements so that the combustion- stop command is outputted from the combustion-stop command generation means (12) before the carbon dioxide concentration in the closed room (CR) exceeds the predetermined value.

2. The method according to claim 1, wherein the closed room (CR) has such an airtightness that, two hours after the room is set at a carbone dioxide concentration of 4% ± 0,2%, a reduction in the carbon dioxide concentration will be 0,1 % or less, and the predetermined value is 1,0%.

3. The method according to claim 1, wherein the heater burner further comprises an air fan (4) to send heat from the burner unit out into the room.

4. The method according to claim 1 or 2, wherein the reference temperature range ranges from a temperature as a value obtained by adding 5°C to 7°C initial room temperature (To) to a temperature as a value obtained by adding 11°C to 13°C to the initial room temperature (To), and the first addition temperature (AT1) is 7°C or lower, the second addition temperature (AT2) is 1,5°C or lower and the third addition temperature (AT3) is 13°C or lower,

5. The method according to claim. 2, wherein the reference temperature range ranges from aa temperature as a value obtained adding about 6°C to the initial room temperature (To) to a temperature as a value obtained by adding about 12°C to the initial room temperature (To), and the first addition temperature (ATI) is about 7°C, the second addition temperature (AT2) is about 1°C and the third addition temperature (AT3) is about 13°C.

6. Method according to claim 1, wherein the heater burner further comprises a timer (13) to count a predetermined timer period from the start of combustion, wherein, after the timer has finishes counting the timer period, the combustion-stop command generation means (12) is so constructed as to output the combustion-stop command based on a predetermined upper limit room temperature as the reference value which is used instead of the reference value determined by the combustion-stop temperature decision means (10).

7. The method according to claim 5, wherein the timer period is 30 minutes or more.

## Patentansprüche

1. Verfahren zum automatischen Steuern einer Verbrennungsmenge in einem Heizbrenner, wobei der Heizbrenner umfasst:
eine Brennereinheit (1) mit einer Verbrennungskammer zum Verbrennen eines Brennstoffs mit Luft aus einem zu beheizenden Raum;
ein Temperatureinstellmittel (6) zum Einstellen einer Solltemperatur (Ts);
ein Raumtemperatur-Detektionsmittel (7) zum Detektieren einer Raumtemperatur (T);
ein Luftverunreinigungs-Detektionsmittel (8) zum Detektieren einer Luftverunreinigung in dem Raum und Ausgeben eines Verbrennungsstoppbefehls, bevor die Verbrennung einen vorbestimmten Wert übersteigt; und
eine Steuereinheit (5) zum automatischen Steuern einer Verbrennungsmenge in der Brennereinheit (1) entsprechend der Solltemperatur (Ts) und der Raumtemperatur (T), so dass die Raumtemperatur (T) der Solltemperatur (Ts) nahe kommt, und zum Stoppen der Verbrennung bei Empfang des Verbrennungsstoppbefehls,
wobei das Luftverunreinigungs-Detektionsmittel (8) ein Verbrennungsstopptemperatur-Entscheidungsmittel (10) und ein Verbrennungsstoppbefehl-Erzeugungsmittel (12) aufweist;
wobei das Verbrennungsstopptemperatur-Entscheidungsmittel (10), auf der Basis der Solltemperatur (Ts) und einer von dem Raumtemperatur-Detektionsmittel (7) detektierten Anfangsraumtemperatur (To) oder einer vorbestimmten Anfangsraumtemperatur (To) zu Beginn der Verbrennung, eine erste Verbrennungsstopptemperatur (Th1), die als ein Referenzwert verwendet wird, wenn die Solltemperatur (Ts) unterhalb eines Referenztemperaturbereiches liegt, eine zweite Verbrennungsstopptemperatur (Th2), die als ein Referenzwert verwendet wird, wenn die Solltemperatur (Ts) innerhalb des Referenztemperaturbereiches liegt, und eine dritte Verbrennungsstopptemperatur (Th3), die als ein Referenzwert verwendet wird, wenn die Solltemperatur (Ts) oberhalb des Referenztemperaturbereiches liegt, bestimmt; und
wobei das Verbrennungsstoppbefehl-Erzeugungsmittel (12) den Verbrennungsstoppbefehl ausgibt, wenn die Raumtemperatur den durch das Verbrennungsstopptemperatur-Entscheidungsmittel (10) bestimmten Referenzwert erreicht;
wobei das Verbrennungsstopptemperatur-Entscheidungsmittel (10) so ausgebildet ist, dass es die erste Verbrennungsstopptemperatur (Th1) als einen Wert, der durch Addieren einer vorbestimmten ersten Additionstemperatur (AT1) zu der Anfangsraumtemperatur (To) erhalten wird, die zweite Verbrennungsstopptemperatur (Th2) als einen Wert, der durch Addieren einer vorbestimmten zweiten Additionstemperatur (AT2), die niedriger als die erste Additionstemperatur (AT1) ist, zu der Solltemperatur (Ts) erhalten wird, und die dritte Verbrennungsstopptemperatur (Th3) als einen Wert, der durch Addieren einer vorbestimmten dritten Additionstemperatur (AT3), die höher als die erste Additionstemperatur (AT1) ist, zu der Anfangsraumtemperatur (To) erhalten wird, definiert,
wobei Verbrennungstests durchgeführt werden, indem die Solltemperatur auf verschiedenen Niveaus in einem geschlossenen Raum (CR) mit einer vorbestimmten Luftdichtigkeit variiert wird, um Temperaturen eines geschlossenen Raumes zu messen, bei welchen eine Kohlendioxidkonzentration in dem geschlossenen Raum den vorbestimmten Wert übersteigt, und die erste Additionstemperatur (AT1), die zweite Additionstemperatur (AT2) und die dritte Additionstemperatur (AT3) auf der Basis der Temperaturmessungen so bestimmt werden, dass der Verbrennungsstoppbefehl von dem Verbrennungsstoppbefehl-Erzeugungsmittel (12) ausgegeben wird, bevor die Kohlendioxidkonzentration in dem geschlossenen Raum (CR) den vorbestimmten Wert übersteigt.

2. Verfahren nach Anspruch 1, wobei der geschlossene Raum (CR) eine solche Luftdichtigkeit aufweist, dass zwei Stunden, nachdem der Raum auf eine Kohlendioxidkonzentration von 4 ± 0,2 % eingestellt worden ist, eine Abnahme der Kohlendioxidkonzentration 0,1 % oder weniger beträgt, und der vorbestimmte Wert 1,0 % beträgt.

3. Verfahren nach Anspruch 1, wobei der Heizbrenner ferner ein Luftgebläse (4) umfasst, um Wärme aus der Brennereinheit hinaus in den Raum zu senden.

4. Verfahren nach Anspruch 1 oder 2, wobei der Referenztemperaturbereich von einer Temperatur mit einem Wert, der erhalten wird, indem 5 °C bis 7 °C zu der Anfangsraumtemperatur (To) addiert werden, bis zu einer Temperatur mit einem Wert, der erhalten wird, indem 11 °C bis 13 °C zu der Anfangsraumtemperatur (To) addiert werden, reicht, und die erste Additionstemperatur (AT1) 7 °C oder weniger beträgt, die zweite Additionstemperatur (AT2) 1,5 °C oder weniger beträgt und die dritte Additionstemperatur (AT3) 13 °C oder weniger beträgt.

5. Verfahren nach Anspruch 2, wobei der Referenztemperaturbereich von einer Temperatur mit einem Wert, der erhalten wird, indem etwa 6 °C zu der Anfangsraumtemperatur (To) addiert werden, bis zu einer Temperatur mit einem Wert, der erhalten wird, indem etwa 12 °C zu der Anfangsraumtemperatur (To) addiert werden, reicht, und die erste Additionstemperatur (AT1) etwa 7 °C beträgt, die zweite Additionstemperatur (AT2) etwa 1 °C beträgt und die dritte Additionstemperatur (AT3) etwa 13 °C beträgt.

6. Verfahren nach Anspruch 1, wobei der Heizbrenner ferner einen Zeitgeber (13) umfasst, um eine vorbestimmte Zeitgeberperiode ab dem Beginn der Verbrennung zu zählen, wobei, nachdem der Zeitgeber das Zählen der Zeitgeberperiode beendet hat, das Verbrennungsstoppbefehl-Erzeugungsmittel (12) so ausgebildet ist, dass es den Verbrennungsstoppbefehl auf der Basis einer vorbestimmten oberen Grenz-Raumtemperatur als dem Referenzwert ausgibt, welcher anstelle des durch das Verbrennungsstopptemperatur-Entscheidungsmittel (10) bestimmten Referenzwertes verwendet wird.

7. Verfahren nach Anspruch 5, wobei die Zeitgeberperiode 30 Minuten oder mehr beträgt.

## Revendications

1. Procédé de contrôle automatique d'une quantité de combustion dans un brûleur de chauffage, le brûleur de chauffage comprenant :
une unité de brûleur (1), possédant une chambre de combustion pour brûler un carburant avec de l'air provenant d'une pièce étant chauffée ;
un moyen de réglage de la température (6) pour régler une température de réglage (Ts) ;
un moyen de détection de la température ambiante (7) pour détecter une température ambiante (T) ;
un moyen de détection de contamination de l'air (8) pour détecter une contamination de l'air dans la pièce et émettre une commande d'arrêt de combustion avant que la contamination dépasse une valeur prédéterminée ; et
une unité de commande (5) pour commander automatiquement une quantité de combustion dans l'unité de brûleur (1) selon la température de réglage (Ts) et la température ambiante (T) de sorte que la température ambiante (T) s'approche de la température de réglage (Ts), et pour arrêter la combustion lors de la réception de la commande d'arrêt de combustion,
dans lequel le moyen de détection de contamination de l'air (8) possède un moyen de décision de température d'arrêt de combustion (10) et un moyen de génération de commande d'arrêt de combustion (12) ;
le moyen de décision de température d'arrêt de combustion (8) déterminant, en fonction de la température de réglage (Ts) et d'une température ambiante initiale (T0) détectée par le moyen de détection de température ambiante (7) ou une température ambiante initiale prédéterminée (T0) au début de la combustion, une première température d'arrêt de combustion (Th1) utilisée comme valeur de référence quand la température de réglage (Ts) est inférieure à une gamme de températures de référence,
une deuxième température d'arrêt de combustion (Th2) utilisée comme valeur de référence quand la température de réglage (Ts) est dans la gamme de températures de référence, et une troisième température d'arrêt de combustion (Th3) utilisée comme valeur de référence quand la température de réglage (Ts) est supérieure à la gamme de températures de référence ; et
le moyen de génération de commande d'arrêt de combustion (12) émettant la commande d'arrêt de combustion quand la température ambiante atteint la valeur de référence déterminée par le moyen de décision de température d'arrêt de combustion (10) ;
dans lequel le moyen de décision de température d'arrêt de combustion (10) est construit de telle façon qu'il définit la première température d'arrêt de combustion (Th1) comme une valeur obtenue en ajoutant une première température d'addition prédéterminée (AT1) à la température ambiante initiale (T0), la deuxième température d'arrêt de combustion (Th2) comme une valeur obtenue en ajoutant une deuxième température d'addition prédéterminée (AT2), inférieure à la première température d'addition (AT1), à la température de réglage (Ts), et la troisième température d'arrêt de combustion (Th3) comme une valeur obtenue en ajoutant une troisième température d'addition prédéterminée (AT3), supérieure à la première température d'addition (AT1), à une température ambiante initiale (T0),
dans lequel des tests de combustion sont menés en variant la température de réglage à différents niveaux dans une pièce fermée (PF) avec une étanchéité à l'air prédéterminée pour mesurer les températures de la pièce fermée auxquelles une concentration en dioxyde de carbone dans la pièce fermée dépasse la valeur prédéterminée, et la première température d'addition (AT1), la deuxième température d'addition (AT2) et la troisième température d'addition (AT3) sont déterminées en fonction des mesures de température de sorte que la commande d'arrêt de combustion est émise à partir du moyen de génération de commande d'arrêt de combustion (12) avant que la concentration de dioxyde de carbone dans la pièce fermée (PF) dépasse la valeur prédéterminée.

2. Procédé selon la revendication 1, dans lequel la pièce fermée (PF) a une étanchéité à l'air telle que, deux heures après que la pièce est réglée à une concentration de dioxyde de carbone de 4 % ± 0,2 %, une réduction de la concentration de dioxyde de carbone sera de 0,1 % ou moins, et la valeur prédéterminée sera de 1,0 %.

3. Procédé selon la revendication 1, dans lequel le brûleur de chauffage comprend en outre un ventilateur d'air (4) pour envoyer la chaleur de l'unité de brûleur dans la pièce.

4. Procédé selon la revendication 1 ou la revendication 2, dans lequel la gamme de températures de référence varie d'une température comme une valeur obtenue en ajoutant 5° C à 7° C à la température ambiante initiale (T0) à une température comme une valeur obtenue en ajoutant 11° C à 13° C à la température ambiante initiale (T0), et la première température d'addition (AT1) est de 7° C ou moins, la deuxième température d'addition (AT2) est de 1,5° C ou moins, et la troisième température d'addition (AT3) est de 13° C ou moins.

5. Procédé selon la revendication 2, dans lequel la gamme de températures de référence varie d'une température comme une valeur obtenue en ajoutant environ 6° C à la température ambiante initiale (T0) à une température comme une valeur obtenue en ajoutant environ 12° C à la température ambiante initiale (T0), et la première température d'addition (AT1) est d'environ 7° C, la deuxième température d'addition (AT2) est d'environ 1° C, et la troisième température d'addition (AT3) est d'environ 13° C .

6. Procédé selon la revendication 1, dans lequel le brûleur de chauffage comprend en outre une minuterie (13) pour décompter une période de la minuterie prédéterminée à partir du début de la combustion, dans lequel, une fois que la minuterie a fini de décompter la période de la minuterie, le moyen de génération de commande d'arrêt de combustion (12) est construit de façon tel qu'il émet la commande d'arrêt de combustion en fonction d'une limite supérieure prédéterminée de la température ambiante comme valeur de référence qui est utilisée au lieu de la valeur de référence déterminée par le moyen de décision de température d'arrêt de combustion (10).

7. Procédé selon la revendication 5, dans lequel la période de la minuterie est de 30 minutes ou plus.
